(19)

Europäisches
Patentamt
European
Patent Office
Office européen
des brevets

(11) **EP 2 988 610 B1**

(12) **EUROPEAN PATENT SPECIFICATION**

(45) Date of publication and mention
of the grant of the patent:
**21.09.2016 Bulletin 2016/38**

(51) Int Cl.:
***A23L 3/005*** (2006.01)

(21) Application number: **14713489.4**

(22) Date of filing: **31.03.2014**

(86) International application number:
**PCT/EP2014/056406**

(87) International publication number:
**WO 2014/173632 (30.10.2014 Gazette 2014/44)**

(54) **STERILIZATION OF HETEROGENEOUS PRODUCTS BY OHMIC HEATING**

STERILISIERUNG HETEROGENER PRODUKTE DURCH OHMISCHE HEIZUNG

STÉRILISATION DE PRODUITS HÉTÉROGÈNES PAR CHAUFFAGE OHMIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **23.04.2013 EP 13164910**

(43) Date of publication of application:
**02.03.2016 Bulletin 2016/09**

(73) Proprietors:
• **Unilever N.V.**
**3013 AL Rotterdam (NL)**
Designated Contracting States:
**AL AT BE BG CH CZ DE DK EE ES FI FR GR HR
HU IS IT LI LT LU LV MC MK NL NO PL PT RO RS
SE SI SK SM TR**
• **Unilever PLC**
**London, Greater London EC4Y 0DY (GB)**
Designated Contracting States:
**CY GB IE MT**

(72) Inventors:
• **BIALEK, Jadwiga, Malgorzata**
**NL-3133 AT Vlaardingen (NL)**
• **INOUE, Chiharu**
**NL-3133 AT Vlaardingen (NL)**

• **VREEKER, Robert**
**NL-3133 AT Vlaardingen (NL)**

(74) Representative: **Tjon, Hon Kong Guno**
**Unilever N.V.**
**Unilever Patent Group**
**Olivier van Noortlaan 120**
**3133 AT  Vlaardingen (NL)**

(56) References cited:
**US-A1- 2007 243 299     US-A1- 2008 020 110**

• **SARANG ET AL.: "Product formulation for ohmic
heating: Blanching as a pretreatment method to
improve uniformity in of solid-liquid food heating
mixtures", JOURNAL OF FOOD SCIENCE, vol. 72,
no. 5, 2007, pages 227-234, XP002712709, DOI:
10.1111/j.1750-3841.2007.00380.x cited in the
application**
• **WANG & SASTRY: "Salt diffusion into vegetable
tissue as a pretreatment for ohmic heating:
Electrical conductivity profiles and vacuum
infusion studies", JOURNAL OF FOOD
ENGINEERING, vol. 20, 1993, pages 299-309,
XP002712710, DOI:
10.1016/0260-8774(93)90080-4 cited in the
application**

**Description**

**TECHNICAL FIELD OF THE INVENTION**

The present invention relates to a method of sterilization of heterogeneous products using ohmic heating. More specifically, the invention relates to a method of sterilization by ohmic heating of heterogeneous food products comprising solid particles dispersed in a continuous aqueous phase. The present invention also provides sterilized heterogeneous products obtainable by said method.

**BACKGROUND OF THE INVENTION**

Shelf life of many products, in particular food products, is limited by the presence of microorganisms. The most common process for preserving products from microbial spoilage is heat sterilization. However, heating may have undesirable effects like changes in color, shape, taste, aroma and texture. The challenge, therefore, is to improve existing sterilization methods so that the sterilized product retains as many of its desirable qualities as possible during sterilization. Ohmic heating is an example of a sterilization method in which the time and temperature of heating are optimized to minimize the product's exposure to heat. Ohmic heating is a process wherein electric current is passed through materials with the purpose of heating and sterilizing them. In ohmic heating, there is in principle no need to transfer heat through solid-liquid interfaces or inside solid particles via thermal conduction since the energy is dissipated directly into the material. As a result, ohmic heating can be used to heat materials at an extremely rapid rate and the depth of penetration is virtually unlimited. It is therefore also possible to heat solids or particulate material and/or material having high viscosity, which can hardly be achieved using conventional heating techniques.
The applicability of ohmic heating depends on the electrical conductivity of the product to be heated. Most food preparations contain a moderate percentage of free water with dissolved ionic salts and therefore conduct sufficiently well for ohmic heating to be applied.

In case the product has a more or less homogeneous electrical conductivity, the product does not experience a large temperature gradient within itself as it heats, and liquid and solid particles are heated virtually simultaneously.

However, very few liquid or liquid-like food products are truly homogeneous. Most food products are heterogeneous and consist of mixtures of a continuous phase with solid particles of different natures dispersed therein. Liquids and solid particles typically have different electrical conductivities, the electrical conductivity of solid particles usually being much lower than that of the liquid phase. This difference in electrical conductivity generally causes the liquid to heat up much faster than the solid particles during ohmic heating.

To obtain complete sterilization of a heterogeneous product, the required process conditions, e.g. minimum sterilization temperature, must be applied to the slowest-heating point in the product, which is usually the center of the largest solid particle in the middle of the product to be sterilized. Such heat treatment necessarily results in overheating of the liquid phase, with consequent heat damage to the liquid phase and overcooking of the outside of the solid particles. This problem limits the maximum size of the particles in a heterogeneous product to be sterilized using ohmic heating.

In order to overcome this problem, attempts have been made to adjust the electrical conductivity of the continuous liquid phase to that of the remaining solid constituents of the heterogeneous products to be sterilized.

US 2008/0020110 A1 describes a process of sterilization using ohmic heating of heterogeneous food products comprising at least one liquid phase and solid particles. The process described comprises a step of preparing a concentrated liquid/particles phase with a reduced amount of salt, a sterilization step including ohmic heating, a step of holding the concentrated phase for a certain time at elevated temperature, a step of cooling the sterile concentrated phase and a packaging step. The purpose of reducing the salinity of the concentrated phase is to compensate for the difference in the electrical conductivity of the liquid phase and solid particles constituting the heterogeneous food product. After the heating phase, the concentrated phase is admixed with an aqueous phase comprising sterile salted water for final formulation of the heterogeneous mixture.

In another approach to overcome this problem, attempts have been made to alter the electrical conductivity of the solid materials, to more closely match the conductivity of the continuous liquid phase. Wang and Sastry (J. Food Eng., 20 1993 299-309 and J. Food Eng., 20 1993 311-323) describe the treatment of potato particles with salt solutions prior to ohmic heating.

Sarang et al. (J. Food Science E: Food Eng. Phys. Prop., 72(5) 2007 E227-E234) altered the electrical conductivity of solid foods by blanching pretreatment. The solid constituents of chicken chow mein, comprising chicken, celery, bean sprouts, mushroom and water chestnuts, were blanched in a highly conductive soy sauce at 100 °C to adjust their electrical conductivity to that of the chow mein sauce.

The ohmic heating methods that match the electrical conductivities of the continuous liquid phase and the solid particles dispersed therein as described in the prior art comprise multiple process steps and/or are labor-intensive. There is a continuous need for less complex sterilization methods.

It is therefore an object of the present invention to provide a less complex ohmic heating method for the sterilization of heterogeneous products that retains the desirable qualities of the freshly prepared product.

## SUMMARY OF THE INVENTION

The present inventors have unexpectedly found that the above object can be met for heterogeneous products comprising a continuous liquid aqueous phase, dispersed solid particles and oil, by employing dispersed droplets of a water-in-oil ($W_1$/O) emulsion containing an internal aqueous phase $W_1$ having a higher electrical conductivity than the continuous liquid aqueous phase, more in particular by employing a high concentration of dissolved alkali metal salt in the internal aqueous phase.

It was unexpectedly found that at most a small fraction of the dissolved ions contained in the internal aqueous phase of the droplets of the $W_1$/O emulsion is released from the emulsion during ohmic heating. Thus, it is possible to sterilize heterogeneous products comprising solid particles having a relatively low electrical conductivity under optimum ohmic heating conditions by reducing the alkali metal salt content of the continuous aqueous phase and 'hiding' this salt in the internal aqueous phase of the W/O droplets that are dispersed throughout the heterogeneous product.

Surprisingly, it was found that the alkali metal contained in the internal aqueous phase of the $W_1$/O droplets is substantially released therefrom within a few days after sterilization. Thus, within a few days after sterilization, the alkali metal content of the sterilized product is comparable to that of a product made according to the same recipe, but without using the dispersed droplets of the $W_1$/O emulsion.

Accordingly, the present inventors have developed a process of sterilizing a heterogeneous product comprising solid particles dispersed in a continuous liquid aqueous phase, said process comprising:

- providing a non-sterile heterogeneous product comprising a continuous aqueous phase, dispersed solid particles and dispersed droplets of a water-in-oil ($W_1$/O) emulsion containing an internal aqueous phase $W_1$, said internal aqueous phase $W_1$ having a higher electrical conductivity than the continuous liquid aqueous phase; and
- sterilizing the non-sterile heterogeneous product by ohmic heating.

This process offers the advantage that it enables heterogeneous products comprising solid particles to be sterilized by ohmic heating in a single process step with minimum heating impact.

The present inventors further provide sterilized heterogeneous products, obtainable by the process according to the invention.

## DETAILED DESCRIPTION OF THE INVENTION

Accordingly, a first aspect of the invention concerns a process of sterilizing a non-sterile heterogeneous product, said process comprising the steps of:

- providing a non-sterile heterogeneous product comprising a continuous aqueous phase, dispersed solid particles and dispersed droplets of a water-in-oil ($W_1$/O) emulsion containing an internal aqueous phase $W_1$, said internal aqueous phase $W_1$ having a higher electrical conductivity than the continuous liquid aqueous phase; and
- sterilizing the non-sterile heterogeneous product by ohmic heating.

The term "ohmic heating" as used herein refers to a process wherein the heterogeneous product is heated by passing an electric current through said product. The process of ohmic heating is often referred to in literature as Joule heating, electrical resistance heating, direct electrical resistance heating, electroheating or electroconductive heating. These terms are considered to be interchangeable. In what follows, the term ohmic heating will be used. The term "oil" as used herein refers to lipids selected from the group of triglycerides, diglycerides, monoglycerides, phospholipids, fatty acids and combinations thereof.

The term "emulsion" as used herein refers to a mixture of two or more immiscible liquids wherein at least one liquid (the dispersed phase) is dispersed in another liquid (the continuous phase). Examples are single emulsions like a liquid oil phase dispersed in an aqueous phase (O/W-emulsion or oil-in-water emulsion), or an aqueous phase dispersed in a liquid oil phase (W/O-emulsion or water-in-oil emulsion). Double emulsions are also possible, including water-in-oil-in-water emulsions (W/O/W) and oil-in-water-in-oil emulsions (O/W/O).

In this document and in its claims, the verb 'to comprise' and its conjugations are used in their non-limiting sense to mean that items following the word are included, without excluding items not specifically mentioned. In addition, reference to an element by the indefinite article 'a' or 'an' does not exclude the possibility that more than one of the element is present, unless the context clearly requires that there be one and only one of the elements. The indefinite article 'a' or 'an' thus usually means 'at least one'.

The heterogeneous product preferably is a heterogeneous food product or beverage. Preferred examples of heterogeneous food products and beverages that can be sterilized using the process of the present invention are soups, sauces, dips, fruit mixtures in juice and fruit concentrates. Even more preferably, the heterogeneous product is a savoury food product selected from soups, sauces and dips.

The constituents of the continuous aqueous phase and the solid particles dispersed therein typically originate from different sources. Heterogeneous food products and beverages wherein the constituents of the continuous aqueous phase and the solid particles dispersed therein originate from the same source are, however, also envisaged. Non-limiting examples of such single source heterogeneous products are peeled tomatoes in tomato puree and sliced peaches in concentrated juice.

In case the product to be sterilized is a heterogeneous food product or beverage, the solid particles are preferably chosen from the group consisting of chunks of meat, vegetables, fruit and combinations thereof.

The solid particles dispersed in the continuous liquid aqueous phase can be large particles or small particles. They can be heterogeneous or homogenous with regard to composition. As explained herein before, the benefits of the present invention are particularly pronounced at increased particle size of the solid particles. Hence, in a preferred embodiment, the particle size of the solid particles is at least 20 $\mu$m, more preferably between 50 and 500 $\mu$m.

Large solid particles that have been heated to the sterilization temperature during ohmic heating may be over processed if the sterilized particles do not cool down sufficiently fast after ohmic heating. The maximum size of the solid particles in the heterogeneous product that can be sterilized using the method of the present invention is therefore limited and depends among other things on the thermal conductivity of the solid particles. In a preferred embodiment, the non-sterile heterogeneous product contains less than 5 wt.%, more preferably less than 2 wt.%, and most preferably less than 1 wt.% of solid particles having a diameter of more than 20 mm.

The solid particles typically have a density between 0.85 and 1.25 g/cm$^3$. The solid particles can have a shape selected from the group consisting of cubic, spherical, axially elongated, rectangular, strings, shreds, slices, flakes and combinations thereof.

As explained herein before, a uniform temperature profile during ohmic heating of heterogeneous products comprising a continuous liquid aqueous phase and solid particles dispersed therein can be obtained when the electrical conductivity of the solid particles closely matches the conductivity of the continuous aqueous phase surrounding them.

Electrical conductivity and its temperature dependence of different solid food particles during ohmic heating are described by Sarang et al. (J. Food Eng. 87 2008 351-356).

The continuous aqueous phase of the non-sterile heterogeneous product preferably has an electrical conductivity between 0.01 S·m$^{-1}$ and 1.25 S·m$^{-1}$, preferably between 0.02 S·m$^{-1}$ and 1.0 S·m$^{-1}$, at a temperature of 25°C. The electrical conductivity of the continuous aqueous phase of the heterogeneous product can be manipulated by adding alkali metal salt or by diluting with an aqueous liquid having low electrical conductivity. It is within the skills of the artisan to adjust the electrical conductivity to the required value.

The ratio of the electrical conductivity of the solid particles to the electrical conductivity of the continuous aqueous phase in the non-sterile heterogeneous product is advantageously between 0.7 and 1.3, more preferably it is between 0.85 and 1.15, even more preferably between 0.95 and 1.05.

The electrical conductivity of the continuous aqueous phase of the non-sterile heterogeneous product is at least 10 times lower, preferably at least 30 times lower and most preferably at least 100 times lower, than the electrical conductivity of the internal aqueous phase $W_1$.

In a preferred embodiment, the weight ratio of the internal aqueous phase $W_1$ and the oil phase in the dispersed droplets of the $W_1$/O emulsion is within the range of 1:4 to 4:1.

The non-sterile heterogeneous product advantageously comprises between 2 and 70 wt.% of the dispersed droplets of the $W_1$/O emulsion. The droplets of the $W_1$/O emulsion preferably have a volume weighted average diameter between 5.0 and 35 $\mu$m, more preferably between 6.0 and 25.0 $\mu$m and most preferably between 7.0 and 15 $\mu$m.

The heterogeneous product may be a concentrated dispersion of solid particles in a continuous aqueous phase. However, the benefits of the invention can equally be realized with a dilute dispersion of solid particles. Typically, the non-sterile heterogeneous product comprises at least 5 wt.%, more preferably between 10 and 75 wt.%, of the solid particles.

In a particularly preferred embodiment the non-sterile heterogeneous product is prepared by:

- providing a non-sterile water-in-oil-in-water ($W_1$/O/$W_2$) emulsion comprising an internal aqueous phase $W_1$ comprising alkali metal cations, an external aqueous phase $W_2$ and an oil phase separating the internal aqueous phase $W_1$ and the external aqueous phase $W_2$; and

- combining the $W_1$/O/$W_2$ emulsion with solid particles and optionally further ingredients.

For clarity purposes, the internal aqueous phase dispersed in the oil phase of a W/O emulsion or W/O/W emulsion will be referred to as 'W$_1$', while the external aqueous phase of a W/O/W emulsion will be referred to as 'W$_2$'. The step of combining the W$_1$/O/W$_2$ emulsion with solid particles and optionally further ingredients may suitably be performed by different procedures. Examples of these procedures are listed below:

- Combining the W$_1$/O/W$_2$ emulsion with an aqueous liquid containing the solid particles and optionally further ingredients;
- Combining the W$_1$/O/W$_2$ emulsion with the solid particles and further ingredients such as, for instance, an aqueous liquid;
- Combining the W$_1$/O/W$_2$ emulsion with the solid particles.

The W$_1$/O/W$_2$ emulsion employed in the present process can be prepared using techniques known in the art. Typically, emulsifier is added to the oil phase, preferably with stirring and if needed, with heating. Water comprising alkali metal salt is added and the mixture is mixed thoroughly to produce a W$_1$/O emulsion. Next, the W$_1$/O emulsion is combined with an aqueous phase, and the combination is thoroughly mixed to produce the W$_1$/O/W$_2$ emulsion. The external aqueous phase W$_2$ can comprise ingredients like dissolved salts, osmotic agents, emulsifiers, thickeners and other components required for the intended application of the sterilized product. The W$_1$/O/W$_2$ emulsion may suitably be produced using a conventional homogenizer, colloid mill, sonicator, cross-flow membrane emulsifier, static mixer, or microfluidation device.

The W$_1$/O/W$_2$ emulsion employed in the present process preferably has a disperse W$_1$/O phase with droplets having a volume weighted average diameter between 5.0 and 35 $\mu$m, more preferably between 6.0 and 25.0 $\mu$m and most preferably between 7.0 and 15 $\mu$m. The aqueous phase W$_1$ dispersed in the oil phase preferably has a volume weighted average diameter between 0.5 and 6 $\mu$m, more preferably between 1.0 and 5.0 $\mu$m and most preferably between 1.5 and 4 $\mu$m.

In a preferred embodiment, the internal aqueous phase W$_1$ constitutes between 3 and 50%, more preferably between 5 and 48% and most preferably between 10 and 46% by weight of the W$_1$/O/W$_2$ emulsion.

In another preferred embodiment, the W$_1$/O/W$_2$ emulsion contains between 5 and 50 wt. % of oil, more preferably between 6 and 30 wt. % of oil, and most preferably between 7 and 25 wt.% oil based on the total weight of the W$_1$/O/W$_2$ emulsion.

In still another preferred embodiment, the external aqueous phase W$_2$ of the non-sterile W$_1$/O/W$_2$ emulsion constitutes between 20 and 90%, more preferably between 30 and 80% and most preferably between 35 and 70% by weight of said emulsion.

Triglycerides preferably represent at least 60 wt.%, more preferably at least 80 wt.% and most preferably at least 90 wt.% of the oil contained in the W$_1$/O/W$_2$ emulsion.

The oil phase advantageously comprises edible oils. Edible oils that may suitably be applied in the oil phase of the W$_1$/O/W$_2$ emulsion include cottonseed oil, olive oil, palm oil, soybean oil, canola oil (rapeseed oil), pumpkin seed oil, corn oil, sunflower oil, safflower oil, peanut oil, grape seed oil, sesame oil, rice bran oil, palm kernel oil, coconut oil, avocado oil, fish oil and combinations thereof.

In a preferred embodiment, the electrical conductivity of the external aqueous phase W$_2$ is at least 10 times lower, preferably at least 30 times lower, and most preferably at least 100 times lower, than the electrical conductivity of the internal aqueous phase W$_1$.

As indicated before, the non-sterile heterogeneous product can be prepared by combining the W$_1$/O/W$_2$ emulsion with solid particles *per se* and optionally further ingredients such as an aqueous liquid. Alternatively, the non-sterile heterogeneous product can be prepared by combining the W$_1$/O/W$_2$ emulsion with an aqueous liquid containing the solid particles.

Combining the W$_1$/O/W$_2$ emulsion with an aqueous liquid offers the advantage that the W$_1$/O/W$_2$ emulsion may be prepared under optimum conditions (high stability and high content of alkali metal cations in the internal aqueous phase). Dissolved components or small particles that could adversely affect the preparation of the W$_1$/O/W$_2$ emulsion are advantageously incorporated in an aqueous liquid that is combined with the W$_1$/O/W$_2$ emulsion. This aqueous liquid may also contain the solid particles that are combined with the W$_1$/O/W$_2$ emulsion. Hence, in a preferred embodiment, the non-sterile heterogeneous product is prepared by combining the W$_1$/O/W$_2$ emulsion with solid particles and aqueous liquid.

The aqueous liquid that is added to the W$_1$/O/W$_2$ emulsion can comprise ingredients like dissolved salts, osmotic agents, thickeners and other components required for the intended application of the sterilized product. According to an even more preferred embodiment the non-sterile heterogeneous product is prepared by combining the W$_1$/O/W$_2$ emulsion with an aqueous liquid comprising the solid particles.

For many heterogeneous products, in particular heterogeneous food products such as soups and sauces, the amount of alkali metal salt required to obtain homogeneous heating of both continuous aqueous phase and solid particles of the heterogeneous product is not sufficient to give the product its desired properties. The additional amount of alkali metal salt that is needed to provide the heterogeneous product with the required properties is therefore dissolved in the internal aqueous phase $W_1$ such that the non-sterile heterogeneous product as a whole has the required overall alkali metal salt concentration.

In an advantageous embodiment, the internal aqueous phase $W_1$ has an alkali metal cation content of at least 2 wt.%. More preferably, the internal aqueous phase $W_1$ comprises at least 3 wt.%, even more preferably at least 3.5 wt.% and most preferably at least 4 wt.% of alkali metal cation by weight of said internal aqueous phase.

The alkali metal cation preferably is a cation of an alkali metal selected from the group consisting of sodium, potassium and combinations thereof. The alkali metal cations according to the present invention are typically present in the form of dissolved salts. In a preferred embodiment, the alkali metal cations are applied in the form of dissolved alkali metal salts selected from the groups consisting of potassium chloride, sodium chloride and combinations thereof. The internal aqueous phase $W_1$ preferably comprises at least 5 wt.%, more preferably at least 8 wt.% of dissolved alkali metal salt by weight of said internal aqueous phase.

In a preferred embodiment, the amount of alkali metal cation contained in the internal aqueous phase $W_1$ of the $W_1/O/W_2$ emulsion equates to at least 0.5%, more preferably at least 1% and most preferably at least 1.5% by weight of said emulsion.

In another preferred embodiment, the amount of alkali metal cation contained in the internal aqueous phase $W_1$ of the non-sterile heterogeneous product equates to at least 0.1%, more preferably at least 0.3%, even more preferably at least 0.5% and most preferably at least 0.8% by weight of said heterogeneous product.

The heterogeneous product as well as the $W_1/O/W_2$ emulsion preferably contain a water-in-oil (W/O) emulsifier. The bulk of this W/O emulsifier is preferably present at the interface between the internal aqueous phase ($W_1$) and the oil phase of the $W_1/O/W_2$ emulsion. W/O emulsifiers facilitate the formation of the $W_1/O$ emulsion and also help to prevent destabilization of the $W_1/O/W_2$ emulsion or the heterogeneous product prior to or during ohmic heating. The W/O emulsifier preferably has a hydrophilic-lipophilic balance (HLB) value of less than 9, preferably less than 6.5, even more preferably between 1 and 5.

Non-limiting examples of W/O emulsifiers include polyglycerol polyricinoletae (PGPR), sorbitan monostearate, acetic acid ester of monoglycerides, milk proteins, and combinations thereof. The preferred internal emulsifier for use in the process according to the invention is PGPR.
The W/O emulsifier is typically applied in an amount between 1.5 and 15.0 wt.%, preferably between 2.0 and 12.0 wt.% and most preferably between 4.0 and 11.0 wt.%, based on the weight of the oil phase of the $W_1/O$ emulsion.

The heterogeneous product as well as the $W_1/O/W_2$ emulsion preferably contain an oil-in-water (O/W) emulsifier. In case of the heterogeneous product most of the O/W emulsifier preferably is present at the interface between the continuous liquid aqueous phase and the oil phase of the $W_1/O$ emulsion droplets. In case of the $W_1/O/W_2$ emulsion it is preferred that most of the O/W emulsifier is present at the interface between the external aqueous phase ($W_2$) and the oil phase of the $W_1/O/W_2$ emulsion. O/W emulsifiers facilitate the formation of the $W_1/O/W_2$ emulsion and also help to prevent destabilization of the $W_1/O/W_2$ emulsion or the heterogeneous product prior to or during ohmic heating. The O/W emulsifier preferably has a HLB value of at least 9, more preferably at least 11, and even more preferable between 12 and 18.

Non-limiting examples of O/W emulsifiers include phospholipids, egg yolk, enzyme modified egg yolk, polysorbates and combinations thereof. The preferred O/W emulsifier for use in the process according to the invention is selected from egg yolk and enzyme modified egg yolk.

The O/W emulsifier is typically employed in an amount of between 1.0 and 7.0 wt.%, preferably between 1.5 and 6.0 wt.%, and most preferably between 3.0 and 5.5 wt.%, based on the total weight of the $W_1/O/W_2$ emulsion.

The stability of $W_1/O/W_2$ emulsions can be affected by a difference in osmolality between the aqueous phases $W_1$ and $W_2$. Osmolality is defined as the number of osmoles of solute per kilogram of solvent (Osm/kg) and is a measure of the total solute concentration in a liquid phase.

High salt concentrations in the internal phase of the $W_1/O/W_2$ emulsion may lead to a substantial difference in osmolality between the aqueous phases of the $W_1/O/W_2$ emulsion. This difference in osmolality may contribute to emulsion destabilization as it provides a driving force for migration of water from the external aqueous phase $W_2$ to internal aqueous phase $W_1$. This undesirable phenomenon may be mitigated by adding solutes to the external aqueous phase. Preferably, these solutes include water-soluble components that do not greatly contribute to the electrical conductivity of the external aqueous phase $W_2$. Examples of suitable solutes with a low electrical conductivity include carbohydrates, such as monosaccharides, disaccharides, oligosaccharides, sugar alcohols and hydrogenated forms of these carbohydrates and combinations thereof.

In a preferred embodiment, the osmolality of the external aqueous phase $W_2$ and the osmolality of the internal aqueous phase $W_1$ of the $W_1/O/W_2$ emulsion differ by no more than a factor 2, more preferably by no more than a factor 1.5 and most preferably by no more than a factor 1.2.

Ohmic heating of the non-sterile heterogeneous product according to the invention can be performed with conventional ohmic heating equipment. The non-sterile heterogeneous product can optionally be preheated using conventional heating methods before introduction into the first heating unit, e.g. to a temperature between 40 and 100°C. In the ohmic heating unit, preferably, an alternating electric current is passed through the heterogeneous product.

Typical sterilization temperatures are 120-140°C. Optionally, a sequence of two or more ohmic heating units can be used. Preferably, the holding time in a single ohmic heating unit is between 1 and 60 seconds. After leaving the ohmic heating unit, the sterilization temperature is maintained for a certain holding time in a holding tube to complete sterilization. Typical holding times in the holding tube are between 5 and 1000 seconds, preferably between 10 and 200 seconds.

The sterilized product is subsequently cooled to a temperature between 20 and 60°C in order to prevent overcooking of the product. Cooling may also be achieved by combining the hot sterilized product with a sterile, cold aqueous liquid.

Usually, alternating electric current (AC) combined with chemically inert electrodes is used in the ohmic heating unit to avoid the possibility of adverse electrochemical reactions. For example carbon, gold, platinum and metal oxides such as iridium oxide and ruthenium oxide may be used as a suitable electrode material. Typical frequencies applied for the alternating current are 50-60 Hz such that the public mains power/utility supply can be used.

The heat generated in a product that is heated by means of ohmic heating can be described as follows:

$$Q = I^2 \cdot R = \sigma \cdot V^2$$

where

    $Q$=power generated, in Watt [W]
    $I$=current, in Amperes [A]
    $R$=electrical resistance, in Ohms [$\Omega$]
    $V$=voltage, in Volts [V]
    $\sigma$=electrical conductivity, in Siemens per meter [S·m$^{-1}$]

The relationship between the heat generated and the increase in temperature can be described in the following manner:

$$Q' = \eta \cdot Q = m \cdot c_p^2 \cdot \Delta T$$

 where

    $Q'$=power converted in to heat, in Watt [kW]
    $\eta$=conversion efficiency, [-]
    $m$=mass flow of the food product, in kilograms per second[kg·s$^{-1}$]
    $c_p$=heat capacity, in kilojoule per kilogram per degree Kelvin [kJ·kg$^{-1}$·K$^{-1}$]
    $\Delta T$=increase in temperature of the $W_1$/O/$W_2$ emulsion, in degrees Kelvin [°K]

In a preferred embodiment, the heat capacity of the $W_1$/O/$W_2$ emulsion is between 2.3 and 4.1 kJ·kg$^{-1}$·K$^{-1}$, more preferably between 2.8 and 3.9 kJ·kg$^{-1}$·K$^{-1}$ and most preferably between 3.2 and 3.7 kJ·kg$^{-1}$·K$^{-1}$.

A second aspect of the invention concerns a sterilized heterogeneous product, obtainable by the process according to any of the foregoing. This sterilized heterogeneous product preferably is microbiologically stable for at least 6 months.

The following examples are meant to further illustrate the invention and some of its preferred embodiments without intending to limit its scope.

## EXAMPLES

*Example 1: preparation of a $W_1$/O/$W_2$ emulsion*

0.80 grams of sodium chloride was dissolved in 10.87 grams of water using a beaker and a magnetic stirrer to form an aqueous 6.86 wt% NaCl solution. Subsequently, 22.87 grams of sunflower oil and 2.29 grams of polyglycerol polyricinolate (PGPR, obtained from Danisco, Grindsted PGPR 90) were mixed in a beaker at 60°C using magnetic stirring. To a third beaker, 23.33 grams of the oil phase O and 11.67 grams of the aqueous NaCl solution was added, and the mixture was heated to 60°C and stirred for 10 minutes at 60°C using a Silverson high shear mixer at 8000 rpm

to produce a $W_1$/O emulsion.

To another beaker, 36.4 grams of water and 0.065 grams of xanthan (Grindsted Clear 200 obtained from Danisco) was added. To this mixture, 25.34 grams of D-sorbitol (osmotic agent), and 3.25 grams of egg yolk (external emulsifier) were added under continuous stirring using a magnetic stirrer. The resulting mixture was stirred for 3 minutes at 20°C using a Silverson high shear mixer at 6000 rpm to form an aqueous phase $W_2$.

In a subsequent step, 35 grams of the $W_1$/O emulsion were slowly added to 65 grams of the aqueous phase $W_2$ and the mixture was stirred in a Kenwood Chef (KM220) mixer at maximum shear for 10 minutes. A $W_1$/O/$W_2$ emulsion was obtained. The final composition of the $W_1$/O/$W_2$ emulsion is given in Table 1 (Ex1) of Example 2. This $W_1$/O/$W_2$ emulsion had an average droplet diameter of the dispersed $W_1$/O phase of 50 μm, as determined using light microscopy.

*Example 2; thermal stability of model soups*

Example 1 (Ex1) was repeated twice using a different amount of the internal emulsifier in the oil phase O and either NaCl in both aqueous phases (control '+') or no NaCl in both aqueous phases (control '-').

The compositions of the different $W_1$/O/$W_2$ emulsions are given in Table 1.

Table 1: compositions of $W_1$/O/$W_2$ emulsions

| Phase | Component | Ex1 | Control + | Control - |
|---|---|---|---|---|
| $W_1$ | Water | 10.87 | 11.59 | 11.59 |
| | NaCl | 0.80 | 0.081 | - |
| O | sunflower oil | 22.9 | 22.9 | 22.9 |
| | PGPR | 2.29 | 0.46 | 0.46 |
| $W_2$ | water | 36.4 | 35.6 | 36.3 |
| | D-sorbitol | 25.3 | 25.3 | 25.3 |
| | Egg yolk | 3.25 | 3.25 | 3.25 |
| | xanthan | 0.065 | 0.065 | 0.065 |
| | NaCl | - | 0.73 | - |
| Total [g] | | 101.9 | 100.0 | 99.9 |

Before subjecting the emulsions to ohmic heating at different temperatures, emulsions Ex1 and Control '+' and '-' were diluted 7.3 times using an aqueous solution of 0.1 wt. % NaCl and 0.1 wt.% xanthan in demineralized water, to produce a model soup.

The electrical conductivity of the model soups during ohmic heating was calculated from electric current and electric voltage at several temperatures in the range of 20-95°C. The results of these measurements are shown in Table 2.

Table 2: Electrical conductivities (E.C.) of model soups as a function of temperature increase by ohmic heating

| Ex1 | | Control + | | Control - | |
|---|---|---|---|---|---|
| T [°C] | E.C. [mS/cm] | T [°C] | E.C. [mS/cm] | T [°C] | E.C. [mS/cm] |
| 21.6 | 2.2 | 20.9 | 3.6 | 21.9 | 2.3 |
| 28.9 | 2.6 | 30.0 | 4.1 | 29.5 | 2.6 |
| 39.1 | 2.9 | 39.8 | 4.8 | 40.0 | 2.9 |
| 48.4 | 3.2 | 51.2 | 5.6 | 48.4 | 3.2 |
| 60.8 | 3.6 | 65.1 | 6.8 | 59.9 | 3.6 |
| 65.4 | 3.8 | 72.0 | 7.2 | 68.2 | 4.0 |
| 70.1 | 3.9 | 80.0 | 7.9 | 77.7 | 4.5 |
| 74.8 | 4.1 | 92.7 | 8.9 | 89.2 | 4.8 |

(continued)

| Ex1 | | Control + | | Control - | |
|---|---|---|---|---|---|
| T [°C] | E.C. [mS/cm] | T [°C] | E.C. [mS/cm] | T [°C] | E.C. [mS/cm] |
| 80.3 | 4.3 | | | 96.4 | 5.1 |
| 85.0 | 4.6 | | | | |
| 90.2 | 4.8 | | | | |
| 95.2 | 5.1 | | | | |

As can be inferred from Table 2, the electrical conductivity as a function of temperature for emulsion 'Ex1' was similar to that of the 'control -' emulsion indicating that no salt leaked out of the inner aqueous phase $W_1$ into the outer aqueous phase $W_2$ during heating.

*Example 3; thermal stability of $W_1/O/W_2$ emulsion as a function of time*

In this example, the stability of the emulsion 'Ex1' (see Example 2) at certain temperatures was determined as a function of time. To this end, the final electrical conductivity at a certain temperature after a considerable hold time was determined. This final electrical conductivity is called $E.C._{\infty}$.

The relative electrical conductivity at temperatures of 20 and 50°C, as defined by $E.C._{relative, t} = (E.C._t - E.G._{t=0})/(E.C._{\infty} - E.C._{t=0})$ as a function of the hold time $t$ for emulsion 'Ex1' is given in Table 3.

The relative electrical conductivity $E.C._{relative, t}$ is a measure of the fraction of salt released from the internal aqueous phase $W_1$. The data in Table 3 clearly demonstrate that emulsion 'Ex1' is stable for at least 3 hrs at a temperature of 50°C.

Table 3: relative electrical conductivity (E.C.) of emulsion 'Ex1' as a function of the hold time

| | 20°C | 50°C |
|---|---|---|
| Hold time $t$ [hrs:min.] | $E.C._{relative, t}$ [-] | $E.C._{relative, t}$ [-] |
| 0:30 | 0.01 | 0.11 |
| 1:00 | 0.03 | 0.24 |
| 1:30 | 0.13 | 0.30 |
| 2:00 | 0.17 | 0.34 |
| 2:30 | 0.19 | 0.36 |
| 3:00 | --- | 0.41 |

*Example 4; thermal stability of $W_1/O/W_2$ emulsions as a function of time after dilution*

In this example, the stability of emulsion 'Ex1' (see Example 2) at certain temperatures as a function of time was tested after dilution. To this end, emulsion 'Ex1' was diluted 10 times with an aqueous solution of 0.1 wt. % NaCl and 0.1 wt.% xanthan in demineralized water. The final electrical conductivity (E.C.) obtained after 2.5 hrs at a certain temperature was determined.

Table 4: Electrical conductivity after 2.5 hr at different temperatures

| | 20°C | 50°C |
|---|---|---|
| E.C. after 2.5hr | 0.192 mS/cm | 0.365 mS/cm |

These results show that also after dilution little leakage of salt occurred from the internal aqueous phase of emulsion 'Ex1'.

*Example 5; ohmic heating of model soups*

W$_1$/O/W$_2$ emulsions as defined in Table 1 were prepared according to the procedure given in Example 1. These emulsions were stored for one week at 5°C. In each case, 170 grams of W$_1$/O/W$_2$ emulsion was diluted with 1030 grams of an aqueous solution of 0.1 wt% NaCl and 0.1 wt.% xanthan to produce a model soup.

The model soups so obtained were sterilized by ohmic heating in an ohmic heating simulator plant with an ohmic heating cell having a capacity of 1.2 liter. Temperatures and hold times during ohmic heating are given in Table 5

Table 5: temperature profile during ohmic heating

| Initial temperature [°C] | Intermediate temperature [°C] | 1st hold time [s] | Final temperature [°C] | Final hold time [s] |
|---|---|---|---|---|
| 20 | 100 | 60 | 135 | 60 |

The electrical conductivities (E.C.) of the three W$_1$/O/W$_2$ emulsions were measured after the final hold time at 135°C. Results are given in Table 6.

Table 6: electrical conductivities of sterilized model soups

| | Model soup 'Ex1' | Model soup 'control-' (no salt) | Model soup 'control+' (with salt) |
|---|---|---|---|
| E.C. at 135°C | 9.1 mS/cm | 7.4 mS/cm | 15.7 mS/cm |

As can be inferred from Table 6, the electrical conductivity of the model soup based on emulsion 'Ex1' is close to that of the model soup based on W$_1$/O/W$_2$ -emulsion 'control-'. This means that during ohmic heating emulsion 'Ex1' retained most of the salt contained in the internal aqueous phase.

*Example 6; ohmic sterilization of savoury products*

In this example, two heterogeneous savoury products of the same overall composition are sterilized by means of ohmic heating. One product is prepared using emulsion 'Ex1' to hide some of the salt while the other product (control) is made by adding an O/W emulsion that was prepared from the same ingredients as emulsion Ex1. Formulations of the two products are shown in Table 7.

Table 7: savoury food composition

| | [g] |
|---|---|
| water | 884 |
| starch | 8 |
| beef base | 6 |
| carrot diced | 72 |
| celeriac diced | 60 |
| tomato concentrate | 50 |
| emulsion ('Ex1' or O/W) | 120 |

The electrical conductivity of the vegetable particles is substantially lower than the electrical conductivity of the carrier liquid of the control product whereas the electrical conductivity of the vegetable particles is comparable to that of the carrier liquid of the product that comprises the W$_1$/O/W$_2$ emulsion).

Both products are sterilized by means of ohmic heating to achieve the same level of sterility. It is found that the product made with the Ex1 W$_1$/O/W$_2$ emulsion can be sterilized to the required level of sterility with less heat load than the control product.

**Claims**

**1.** A process of sterilizing a non-sterile heterogeneous product, said process comprising the steps of:

• providing a non-sterile heterogeneous product comprising a continuous aqueous phase, dispersed solid particles and dispersed droplets of a water-in-oil ($W_1$/O) emulsion containing an internal aqueous phase $W_1$, said internal aqueous phase $W_1$ having a higher electrical conductivity than the continuous aqueous phase; and
• sterilizing the non-sterile heterogeneous product by ohmic heating.

2. Process according to claim 1, wherein the weight ratio of the internal aqueous phase $W_1$ and the oil phase in the dispersed droplets of the $W_1$/O emulsion is within the range of 1:4 to 4:1.

3. Process according to claim 1 or 2, wherein the ratio of the electrical conductivity of the solid particles to the electrical conductivity of the continuous aqueous phase in the non-sterile heterogeneous product is between 0.7 and 1.3

4. Process according to any one of the preceding claims, wherein the non-sterile heterogeneous product contains at least 2 wt.% of the dispersed droplets of the $W_1$/O emulsion.

5. Process according to any one of the preceding claims, wherein the non-sterile heterogeneous product contains at least 5 wt.% of the solid particles.

6. Process according to any one of the preceding claims, wherein the non-sterile heterogeneous product is prepared by:

• providing a water-in-oil-in-water ($W_1$/O/$W_2$) emulsion comprising an internal aqueous phase $W_1$ comprising alkali metal cations, an external aqueous phase $W_2$ and an oil phase separating the internal aqueous phase $W_1$ and the external aqueous phase $W_2$;
• combining the $W_1$/O/$W_2$ emulsion with solid particles and optionally further ingredients to produce a non-sterile heterogeneous product; and
• sterilizing the non-sterile heterogeneous product by ohmic heating.

7. Process according to claim 6, wherein the internal aqueous phase $W_1$ has an alkali metal cation content of at least 2 wt.%.

8. Process according to any one of claims 6 or 7, wherein the amount of alkali metal cation contained in the internal phase $W_1$ of the $W_1$/O/$W_2$ emulsion equates to at least 0.3% alkali metal cation by weight of said emulsion.

9. Process according to any one of claims 6-8, wherein the electrical conductivity of the external aqueous phase $W_2$ is at least 10 times lower than the electrical conductivity of the internal aqueous phase $W_1$.

10. Process according to any one of claims 6-9, wherein the osmolality of the external aqueous phase $W_2$ and the osmolality of the internal aqueous phase $W_1$ differ by no more than a factor 2.

11. Process according to any one of claims 6-10, wherein the $W_1$/O/$W_2$ emulsion contains 5-50 wt.% oil, based on the total weight of the $W_1$/O/$W_2$ emulsion.

12. Process according to any one of claims 6-11, wherein the internal aqueous phase $W_1$ constitutes 3-50% by weight of the $W_1$/O/$W_2$ emulsion.

13. Process according to any one of claims 6-12, wherein the external aqueous phase $W_2$ constitutes 20-90% by weight of the $W_1$/O/$W_2$ emulsion.

14. Process according to any one of the preceding claims, wherein the non-sterile heterogeneous product comprises 5-80 wt.% solid particles having a diameter of at least 20 $\mu$m.

15. A sterile heterogeneous product obtained by a process according to any one of the preceding claims.

**Patentansprüche**

1. Verfahren zum Sterilisieren eines nicht sterilen heterogenen Produkts, wobei das Verfahren die Schritte umfasst:

- Vorsehen eines nicht sterilen heterogenen Produkts mit einer kontinuierlichen wässerigen Phase, dispergierten festen Partikeln und dispergierten Tröpfchen einer Wasser-in-Öl-Emulsion ($W_1$/O-Emulsion), die eine interne wässerige Phase $W_1$ enthält, wobei die interne wässerige Phase $W_1$ eine höhere elektrische Leitfähigkeit aufweist als die kontinuierliche wässerige Phase; und
- Sterilisieren des nicht sterilen heterogenen Produkts durch ohmsche Heizung.

2. Verfahren nach Anspruch 1, wobei das Gewichtsverhältnis der internen wässerigen Phase $W_1$ und der Ölphase in den dispergierten Tröpfchen der $W_1$/O-Emulsion innerhalb des Bereichs von 1:4 bis 4:1 liegt.

3. Verfahren nach Anspruch 1 oder 2, wobei das Verhältnis der elektrischen Leitfähigkeit der festen Partikel zur elektrischen Leitfähigkeit der kontinuierlichen wässerigen Phase im nicht sterilen heterogenen Produkt zwischen 0,7 und 1,3 liegt.

4. Verfahren nach einem der vorangehenden Ansprüche, wobei das nicht sterile heterogene Produkt mindestens 2 Gew.-% der dispergierten Tröpfchen der $W_1$/O-Emulsion enthält.

5. Verfahren nach einem der vorangehenden Ansprüche, wobei das nicht sterile heterogene Produkt mindestens 5 Gew.-% der festen Partikel enthält.

6. Verfahren nach einem der vorangehenden Ansprüche, wobei das nicht sterile heterogene Produkt hergestellt wird durch:

   - Vorsehen einer Wasser-in-Öl-in-Wasser-Emulsion ($W_1$/O/$W_2$-Emulsion) mit einer internen wässerigen Phase $W_1$ mit Alkalimetallkationen, einer externen wässerigen Phase $W_2$ und einer Ölphase, die die interne wässerige Phase $W_1$ und die externe wässerige Phase $W_2$ trennt; und
   - Kombinieren der $W_1$/O/$W_2$-Emulsion mit festen Partikeln und wahlweise weiteren Zutaten, um ein nicht steriles heterogenes Produkt herzustellen; und
   - Sterilisieren des nicht sterilen heterogenen Produkts durch ohmsches Heizen.

7. Verfahren nach Anspruch 6, wobei die interne wässerige Phase $W_1$ einen Alkalimetallkationengehalt von mindestens 2 Gew.-% aufweist.

8. Verfahren nach einem der Ansprüche 6 oder 7, wobei die Menge an Alkalimetallkation, das in der internen Phase $W_1$ der $W_1$/O/$W_2$-Emulsion enthalten ist, gleich mindestens 0,3 % Alkalimetallkation bezogen auf das Gewicht der Emulsion ist.

9. Verfahren nach einem der Ansprüche 6-8, wobei die elektrische Leitfähigkeit der externen wässerigen Phase $W_2$ mindestens 10-mal niedriger ist als die elektrische Leitfähigkeit der internen wässerigen Phase $W_1$.

10. Verfahren nach einem der Ansprüche 6-9, wobei die Osmolalität der externen wässerigen Phase $W_2$ und die Osmolalität der internen wässerigen Phase $W_1$ sich um nicht mehr als einen Faktor von 2 unterscheiden.

11. Verfahren nach einem der Ansprüche 6-10, wobei die $W_1$/O/$W_2$-Emulsion 5-50 Gew.-% Öl auf der Basis des Gesamtgewichts der $W_1$/O/$W_2$-Emulsion enthält.

12. Verfahren nach einem der Ansprüche 6-11, wobei die interne wässerige Phase $W_1$ 3-50 Gewichts-% der $W_1$/O/$W_2$-Emulsion bildet.

13. Verfahren nach einem der Ansprüche 6-12, wobei die externe wässerige Phase $W_2$ 20-90 Gewichts-% der $W_1$/O/$W_2$-Emulsion bildet.

14. Verfahren nach einem der vorangehenden Ansprüche, wobei das nicht sterile heterogene Produkt 5-80 Gew.-% feste Partikel mit einem Durchmesser von mindestens 20 $\mu$m umfasst.

15. Steriles heterogenes Produkt, das durch ein Verfahren nach einem der vorangehenden Ansprüche erhalten wird.

**Revendications**

1. Procédé de stérilisation d'un produit hétérogène non-stérile, ledit procédé comprenant les étapes de :

   • fourniture d'un produit hétérogène non-stérile comprenant une phase aqueuse continue, des particules solides dispersées et des gouttelettes dispersées d'une émulsion eau-dans-huile ($W_1$/O) contenant une phase aqueuse interne $W_1$, ladite phase aqueuse interne $W_1$ présentant une conductivité électrique plus élevée que la phase aqueuse continue ; et
   • stérilisation du produit hétérogène non-stérile par chauffage ohmique.

2. Procédé selon la revendication 1, dans lequel le rapport massique de la phase aqueuse interne $W_1$ et de la phase d'huile dans les gouttelettes dispersées de l'émulsion $W_1$/O se trouve dans l'intervalle de 1:4 à 4:1.

3. Procédé selon la revendication 1 ou 2, dans lequel le rapport de la conductivité électrique des particules solides à la conductivité électrique de la phase aqueuse continue dans le produit hétérogène non-stérile est de 0.7 à 1.3.

4. Procédé selon l'une quelconque des revendications précédentes, dans lequel le produit hétérogène non-stérile contient au moins 2 % en masse des gouttelettes dispersées de l'émulsion $W_1$/O.

5. Procédé selon l'une quelconque des revendications précédentes, dans lequel le produit hétérogène non-stérile contient au moins 5 % en masse des particules solides.

6. Procédé selon l'une quelconque des revendications précédentes, dans lequel le produit hétérogène non-stérile est préparé par :

   • fourniture d'une émulsion eau-dans-huile-dans-eau ($W_1$/O/$W_2$) comprenant une phase aqueuse interne $W_1$ comprenant des cations de métaux alcalins, une phase aqueuse externe $W_2$ et une phase d'huile séparant la phase aqueuse interne $W_1$ et la phase externe $W_2$ ;
   • combinaison de l'émulsion $W_1$/O/$W_2$ avec des particules solides et éventuellement d'autres ingrédients pour produire un produit hétérogène non-stérile ; et
   • stérilisation du produit hétérogène non-stérile par chauffage ohmique.

7. Procédé selon la revendication 6, dans lequel la phase aqueuse interne $W_1$ présente une teneur en cation de métal alcalin d'au moins 2 % en masse.

8. Procédé selon l'une quelconque des revendications 6 ou 7, dans lequel la quantité de cation de métal alcalin contenue dans la phase interne $W_1$ de l'émulsion $W_1$/O/$W_2$ est égale à au moins 0.3 % de cation de métal alcalin en masse de ladite émulsion.

9. Procédé selon l'une quelconque des revendications 6 à 8, dans lequel la conductivité électrique de la phase aqueuse externe $W_2$ est au moins 10 fois inférieure à la conductivité électrique de la phase aqueuse interne $W_1$.

10. Procédé selon l'une quelconque des revendication 6 à 9, dans lequel l'osmolalité de la phase aqueuse externe $W_2$ et l'osmolalité de la phase aqueuse interne $W_1$ diffèrent d'au plus un facteur 2.

11. Procédé selon l'une quelconque des revendications 6 à 10, dans lequel l'émulsion $W_1$/O/$W_2$ contient 5-50 % en masse d'huile, rapporté à la masse totale de l'émulsion $W_1$/O/$W_2$.

12. Procédé selon l'une quelconque des revendications 6 à 11, dans lequel la phase aqueuse interne $W_1$ constitue 3-50 % en masse de l'émulsion $W_1$/O/$W_2$.

13. Procédé selon l'une quelconque des revendications 6 à 12, dans lequel la phase aqueuse externe $W_2$ constitue 20-90 % en masse de l'émulsion $W_1$/O/$W_2$.

14. Procédé selon l'une quelconque des revendications précédentes, dans lequel le produit hétérogène non-stérile comprend 5-80 % en masse de particules solides ayant un diamètre d'au moins 20 $\mu$m.

15. Produit hétérogène stérile obtenu par un procédé selon l'une quelconque des revendications précédentes.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20080020110 A1

**Non-patent literature cited in the description**

- **WANG ; SASTRY.** *J. Food Eng.,* 1993, vol. 20, 299-309
- *J. Food Eng.,* 1993, vol. 20, 311-323
- **SARANG et al.** *J. Food Science E: Food Eng. Phys. Prop.,* 2007, vol. 72 (5), E227-E234
- **SARANG et al.** *J. Food Eng.,* 2008, vol. 87, 351-356